# EUROPEAN PATENT APPLICATION

(11) **EP 4 123 599 A2**
(43) Date of publication of application: **25.01.2023**
(21) Application number: 22212345.7
(22) Date of filing: 08.12.2022
(51) Int. Cl.: G06V 20/56, G06V 10/74, G06V 10/82, G06T 7/10, G06T 7/73

(54) **METHOD AND APPARATUS FOR DETECTING ROAD CHANGE, DEVICE AND STORAGE MEDIUM**

(30) Priority: 08.12.2021 CN 202111491947
(71) Applicant: Beijing Baidu Netcom Science Technology Co., Ltd., Beijing 100085 (CN)
(72) Inventor: WU, Bin, BEIJING 100085 (CN); ZHONG, Kai, BEIJING 100085 (CN); YANG, Jianzhong, BEIJING 100085 (CN); ZHANG, Tongbin, BEIJING 100085 (CN); LU, Zhen, BEIJING 100085 (CN)
(74) Representative: Laqua, Bernd Christian Kurt

(57) **Abstract**

The present disclosure provides a method and apparatus for detecting a road change, a device and a storage medium and relates to the technical field of image processing, in particular to the technical field of intelligent transportation. A specific implementation solution is: obtaining a road image comprising a road to be detected; extracting a road region in the road image as a target region, wherein the road region corresponds to where the road to be detected is located; obtaining a target geographical location of the target region, and determining a reference region for the target region from pre-stored road regions based on the target geographical location; calculating a similarity between the target region and the reference region; and determining, based on the similarity, whether a passability of the road to be detected is changed. By applying the solution provided by the aspects of the present disclosure, efficiency of road change detection can be improved.

## Description

### TECHNICAL FIELD

The present disclosure relates to the technical field of image processing, in particular to the technical field of intelligent transportation.

### BACKGROUND ART

With the development of technologies and the continuous widening of the activity area of human beings, users use electronic maps more and more frequently and the requirements for the quality of map data of electronic maps are also higher and higher. The change of passability of roads is a common task in updating electronic map data, and roads include roads with intersections and roads without intersections. It is of great significance to quickly and effectively detect whether the passability of the road changes, update the electronic map in time based on the detection results, and provide a strong data basis for electronic map navigation.

### SUMMARY OF THE INVENTION

The present disclosure provides a method and apparatus for detecting a road change, a device and a storage medium.

According to an aspect of the present disclosure, a method for detecting a road change is provided and includes:
obtaining a road image comprising a road to be detected;
extracting a road region in the road image as a target region wherein the road region corresponds to where the road to be detected is located;
obtaining a target geographical location of the target region, and determining a reference region for the target region from pre-stored road regions based on the target geographical location;
calculating a similarity between the target region and the reference region; and
determining, based on the similarity, whether a passability of the road to be detected is changed.

According to an aspect of the present disclosure, an apparatus for detecting a road change is provided and includes:
an image obtaining module, configured to obtain a road image comprising a road to be detected;
a region extracting module, configured to extract a road region in the road image as a target region, wherein the road region corresponds to where the road to be detected is located;
a region determining module, configured to obtain a target geographical location of the target region and determine a reference region for the target region from pre-stored road regions based on the target geographical location;
a similarity calculating module, configured to calculate a similarity between the target region and the reference region; and
a detection result determining module, configured to determine, based on the similarity, whether a passability of the road to be detected is changed to obtain a detection result.

According to another aspect of the present disclosure, an electronic device is provided and includes:
at least one processor; and
a memory communicatively connected to the at least one processor, wherein
the memory stores instructions executable by the at least one processor, the instructions being executed by the at least one processor to enable the at least one processor to execute the above method for detecting a road change.

According to another aspect of the present disclosure, a non-transitory computer-readable storage medium storing computer instructions is provided, wherein the computer instructions are configured to cause a computer to execute the above method for detecting a road change.

According to another aspect of the present disclosure, a computer program product is provided and includes a computer program, which, when executed by a processor, implements the above method for detecting a road change.

It can be seen from the above that in the solutions provided by the aspects of the present disclosure, the electronic device extracts the target region where the road to be detected is located, determines the reference region for the target region, and determines, based on the similarity, whether the passability of the road to be detected is changed, between the target region and the reference region. Compared with manually detecting whether the passability of the road changes by a worker in the prior art, efficiency of road change detection is improved.

Besides, as the reference region is determined and obtained from the pre-stored road regions based on the target geographical location of the target region, the above reference region can reflect a historical road condition of the road to be detected, and as the target region can reflect a current road condition of the road to be detected, the similarity between the target region and the reference region can reflect a difference between the current road condition and the historical road condition of the road to be detected. Accordingly, whether the passability of the road to be detected changes can be accurately determined based on the similarity between the target region and the reference region, so that accuracy of road change detection is improved.

It should be understood that contents described in this part are neither intended to indicate key or important features of the aspects of the present disclosure, not configured to limit the scope of the present disclosure. Other features of the present disclosure will be easier to understand through the following specification.

### BRIEF DESCRIPTION OF THE DRAWINGS

Accompanying drawings are used for better understanding the solutions instead of constituting limitation on the present disclosure. In the drawings:
Fig. 1A is a schematic flowchart of a method for detecting a road change of a first type provided by an aspect of the present disclosure.
Fig. 1B is a road image of a first type provided by an aspect of the present disclosure.
Fig. 2 is a schematic flowchart of a method for detecting a road change of a second type provided by an aspect of the present disclosure.
Fig. 3A is a schematic flowchart of a method for detecting a road change of a third type provided by an aspect of the present disclosure.
Fig. 3B is a road image of a second type provided by an aspect of the present disclosure.
Fig. 4 is a schematic flowchart of a method for detecting a road change of a fourth type provided by an aspect of the present disclosure.
Fig. 5 is a flow block diagram of a method for detecting a road change provided by an aspect of the present disclosure.
Fig. 6 is a schematic structural diagram of an apparatus for detecting a road change of a first type provided by an aspect of the present disclosure.
Fig. 7 is a schematic structural diagram of an apparatus for detecting a road change of a second type provided by an aspect of the present disclosure.
Fig. 8 is a schematic structural diagram of an apparatus for detecting a road change of a third type provided by an aspect of the present disclosure.
Fig. 9 is a schematic structural diagram of an apparatus for detecting a road change of a fourth type provided by an aspect of the present disclosure.
Fig. 10 is a block diagram of an electronic device used for implementing a method for detecting a road change of an aspect of the present disclosure.

### DETAILED DESCRIPTION OF EMBODIMENTS

Exemplary aspects of the present disclosure are described below with reference to the accompanying drawings, which include various details of the aspects of the present disclosure for better understanding and should be regarded as only example. Those ordinarily skilled in the art should realize that various changes and modifications can be made to the aspects described herein without departing from the scope and spirit of the present disclosure. For clarity and conciseness, descriptions of well-known functions and structures are omitted in the following description.

In recent years, with gradual accelerating of modernization construction of national urban roads, a large quantity of road additions and changes appear each year. However, current road passability change is discovered mainly depending on manual regular check, so manpower and material resources are greatly wasted.

Existing work has the following main defects.
1. A worker is sent to the site regularly for checking over the road passability change based on map information, which greatly consumes manpower and material resources. An operator is sent to the site for checking over by using map roads, which cannot cover a newly added road scene and seriously affects user experience of a map user.
2. Road image data is collected regularly, the road passability change is checked manually, collected image data is too large, there is no automatic road passability change detection, it only depends on a manual check mode, and consequently a problem of manpower cost waste and the like is caused.

Road change detection solutions provided by the aspects of the present disclosure are described below.

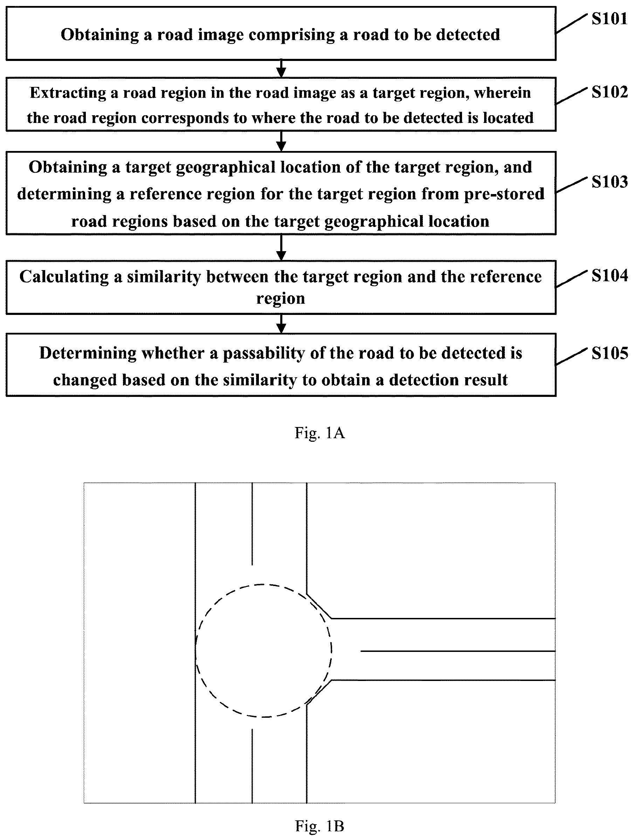

Referring to Fig. 1A, which is a schematic flowchart of a method for detecting a road change of a first type provided by an aspect of the present disclosure. The above method includes the following steps S101 to S105.

Before describing each of the above steps, an executive body of the aspects of the present disclosure is described. The executive body of the aspects of the present disclosure may be an electronic device with a road change detection function. The above electronic device may be a server, or may also be a terminal device.

Step S101: a road image comprising a road to be detected is obtained.

The above road image refers to an image containing a road.

Specifically, the road image may be obtained according to the following two modes.

In a first implementation mode, a worker may input the road image through a user interface provided by the electronic device, and thus the electronic device can obtain the road image.

In a second implementation mode, the electronic device may obtain a plurality of images collected by an image collection device such as front camera of a vehicle and performs image classification on each of the obtained images to obtain the road image.

Step S102: a road region in the road image is extracted as a target region, wherein the road region corresponds to where the road to be detected is located.

The above road region refers to a region including a road. The road included in the road region is called the road to be detected.

In an aspect of the present disclosure, the above road to be detected may be an intersection road. The intersection road refers to a road where a plurality of roads intersect. Taking Fig. 1B as an example, which shows a road image. Fig. 1B contains two roads, a road where the two roads intersect is the intersection road, that is, a region marked by a dotted line circle box in Fig. 1B is a region where the intersection road is located. When the road to be detected is the intersection road, by means of the solution of the present aspect, whether the passability of the intersection road changes can be detected.

In an implementation mode, during extracting of the road region, road detection can be performed on the road image, a detected region is obtained as the road region in the road image.

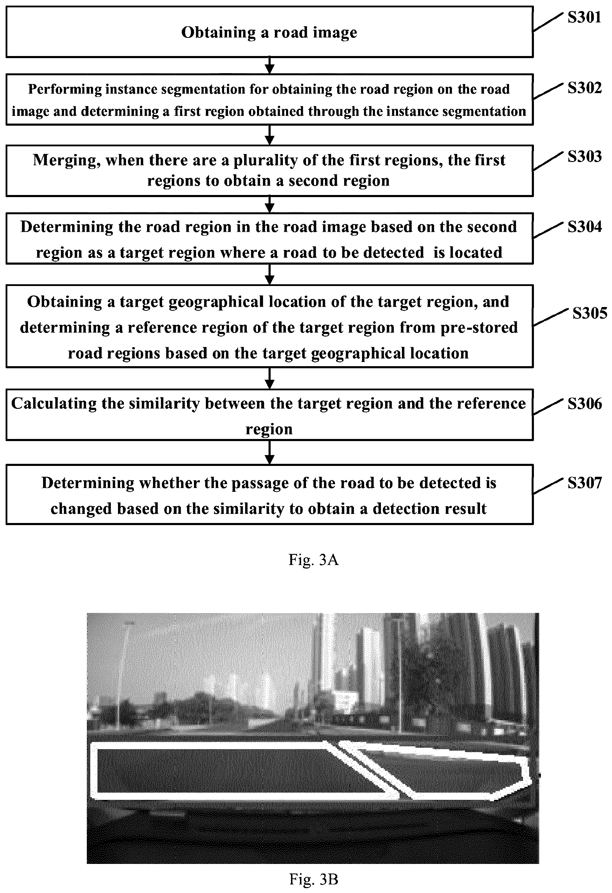

Other modes of detecting the target region may refer to a subsequent aspect shown in Fig. 3A, which will not be described in detail herein.

Step S103: a target geographical location of the target region is obtained, and a reference region for the target region is determined from pre-stored road regions based on the target geographical location.

The above target geographical location reflects actual geographical location information of the target region. For example, the target geographical location may be 36°50' - 37°47' in northern latitude and 113°52' - 115°49' in east longitude.

Specifically, the target geographical location can be obtained through the following two modes.

In a first implementation mode, when the road image is obtained in the above step S101, a geographical coordinate of each pixel point in the road image may also be obtained, and in this case, the target geographical location of the target region may be determined based on the geographical coordinate of each pixel point in the target region in the road image.

In a second implementation mode, each pixel point in the target region may be mapped onto a corresponding coordinate point in a map, and the target geographical location of the target region is determined through the mapped map.

The pre-stored road regions are historically collected road regions, and as the reference region is determined and obtained from the pre-stored road regions based on the target geographical location of the target region, the above reference region can reflect a historical road condition of the road to be detected.

After the road region in the road image is extracted and obtained in the above step S102, the extracted road region in the road image may also be stored.

Each of the pre-stored road regions has a corresponding geographical location, based on this, in an implementation mode, for each pre-stored road region of the pre-stored road regions, a matching degree between the geographical location of the pre-stored road region and the target geographical location may be calculated, and a road region with the highest matching degree is determined as the reference region for the target region.

Specifically, when the matching degree between the geographical locations is calculated, a difference value between the geographical location of the pre-stored road region and the target geographical location may be calculated as the above matching degree. The smaller the difference value is, the higher the matching degree becomes, and the larger the difference value is, the lower the matching degree becomes.
when the matching degree is the highest, it indicates that the probability that the geographical location of the pre-stored road region and the target geographical location of the target region are the same location is the highest, so the probability that a road corresponding to the above road region and the road to be detected corresponding to the target region are the same road is the highest, thus the road region with the highest matching degree may be determined as the reference region for the target region.

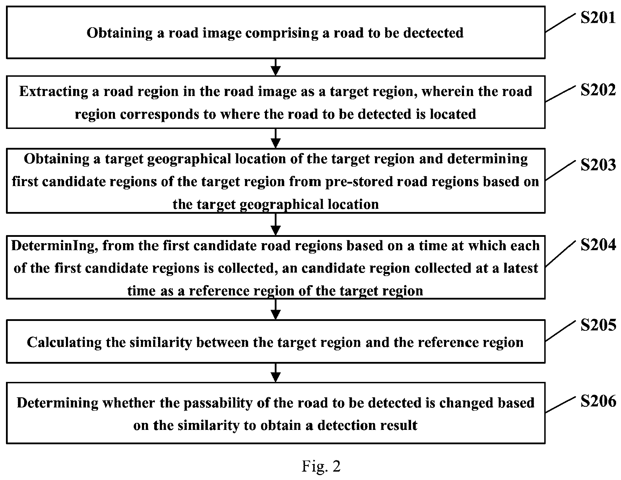

Other modes of determining the reference region may refer to a subsequent aspect corresponding to Fig. 2 and will not be described in detail herein.

Step S104: the similarity between the target region and the reference region is calculated.

As the target region is the target region where the road to be detected is located and configured to reflect the current road condition of the road to be detected, and the reference region is configured to reflect the historical road condition of the road to be detected, the similarity between the target region and the reference region can reflect the similarity between the current road condition and the historical road condition of the road to be detected. The higher the similarity is, the higher the similarity becomes, and the lower the similarity is, the lower the similarity becomes.

In an implementation mode, by means of a pre-trained similarity calculating model, the target region and the reference region may be input into the above similarity calculating model so as to obtain a similarity output by the similarity calculating model as the similarity between the target region and the reference region.

The above similarity calculating model is configured to perform similarity calculation on the two input regions and outputting the calculated similarity.

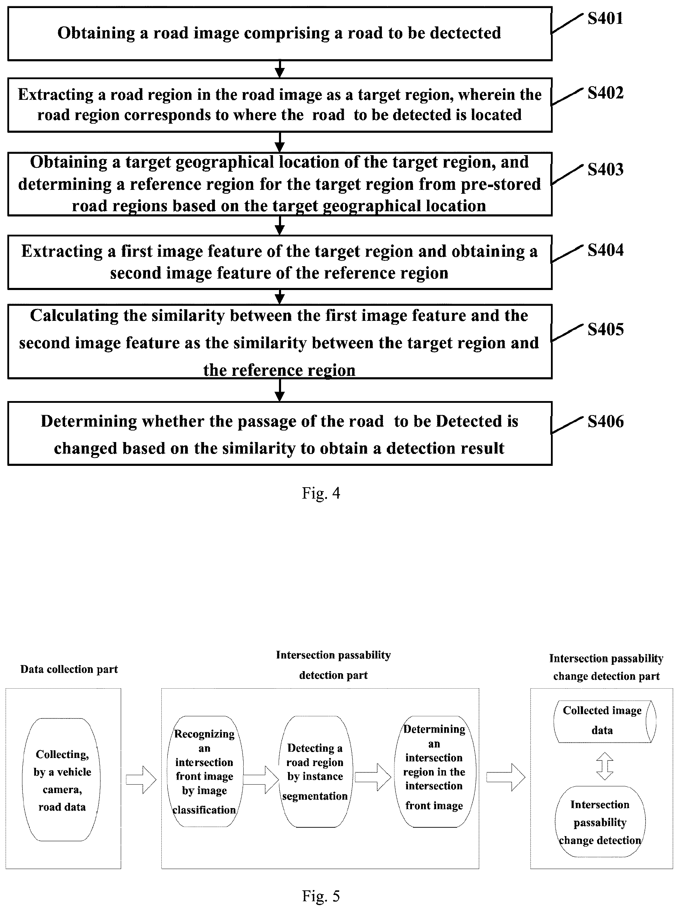

Other modes for calculating the similarity may refer to a subsequent aspect shown in Fig. 4 and will not be described in detail herein.

Step S105: whether the passability of the road to be detected changes is determined based on the similarity to obtain a detection result.

If the similarity is smaller than the similarity threshold, it indicates that the similarity between the target region and the reference region is smaller, a difference between the current road condition and the historical road condition of the road to be detected is larger, in this case, it may be determined that the passability of the road to be detected is changed.

If the similarity is greater than or equal to the similarity threshold, it indicates that the similarity between the target region and the reference region is larger, the difference between the current road condition and the historical road condition of the road to be detected is smaller, in this case, it can be determined that the passability of the road to be detected is not changed.

Whether the passability of the road to be detected is changed is determined based on a magnitude relation between the similarity and the similarity threshold, and the magnitude relation between the similarity and the similarity threshold can accurately represent a magnitude of the similarity between the target region and the reference region, so whether the passability of the road to be detected is changed can be accurately determined based on the magnitude relation between the similarity and the similarity threshold.

It can be seen from the above that in the solution provided by the aspect of the present disclosure, the electronic device extracts the target region where the road to be detected is located, determines the reference region for the target region and determines, based on the similarity, whether the passability of the road to be detected is changed between the target region and the reference region. Compared with manually detecting whether the passability of road is changed by a worker in the prior art, efficiency of road change detection is improved.

Besides, as the reference region is determined and obtained from the pre-stored road regions based on the target geographical location of the target region, the above reference region can reflect the historical road condition of the road to be detected, and as the target region can reflect the current road condition of the road to be detected, the similarity between the target region and the reference region can reflect the difference between the current road condition and the historical road condition of the road to be detected. Accordingly, whether the passability of the road to be detected is changed can be accurately determined based on the similarity between the target region and the reference region, so that accuracy of road change detection is improved.

In step S103 of the above aspect shown in Fig. 1A, apart from an implementation mode of determining the reference region for the target region based on each of the calculated matching degrees, the reference region for the target region may be determined according to steps S203 to S204 in the aspect shown in Fig. 2 below. Referring to Fig. 2, which provides a schematic flowchart of a method for detecting a road change of a second type, the above method includes the following steps S201 to S206.

Step S201: a road image is obtained comprising a road to be detected.

Step S202: a road region in the road image is extracted as a target region, wherein the road region corresponds to where the road to be detected is located.

The above steps S201 to S202 are respectively the same as steps S101 to S102 in the above aspect shown in Fig. 1A and will not be described in detail herein.

Step S203: a target geographical location of the target region is obtained, and first candidate regions of the target region are determined from pre-stored road regions based on the target geographical location.

In an implementation mode, for each pre-stored road region of the pre-stored road regions, a matching degree between a geographical location of the pre-stored road region and the target geographical location may be calculated, and the first candidate regions of the target region are determined from the pre-stored road regions based on each of the calculated matching degrees.

When the first candidate regions are determined, a road region whose matching degree is greater than a matching degree threshold may be determined as a first candidate region of the target region; and the preset quantity of the road regions with the highest matching degree may also be determined as first candidate regions of the target region.

The matching degree can reflect probability that a geographical location of the pre-stored road region and the target geographical location of the target region are the same location, the higher the matching degree is, the larger the probability becomes, and the lower the matching degree is, the smaller the probability becomes, so a road region whose geographical location may be the same location as the target geographical location may be determined accurately based on the matching degree, thus probability that a geographical location of the determined first candidate region and the target geographical location are the same location is higher.

Step S204: a candidate region collected at a latest time is determined from the first candidate regions based on a time at which each of the first candidate regions is collected as the reference region for the target region.

The pre-stored road regions are obtained by collecting at different times, when the above road regions are stored, the time at which each of the above road regions is collected are stored, so the time at which each of the first candidate regions is collected may be obtained, and the reference region is determined based on the time at which each of the first candidate regions is collected.

As a road may continuously have a passability change over time, road conditions reflected by road regions collected at different times may be different. The road region collected at the latest time can accurately reflect the latest road condition of a road, so the first candidate region collected at the latest time may be determined as the reference region for the target region.

For example, the first candidate regions and the time at which each of the first candidate regions is collected are shown in Table 1 as follows.

**Table 1**

| First candidate region | Region 1 | Region 2 | Region 3 | Region 4 |
|---|---|---|---|---|
| time | 2021-1-1, 6:00am | 2021-1-1, 6:00pm | 2021-1-2, 6:00am | 2021-1-2, 6:00pm |

It can be seen from the above Table 1, a time at which a region 4 is collected is the latest time, so the region 4 is determined to the reference region for the target region.

Step S205: the similarity between the target region and the reference region is calculated.

Step S206: whether the passability of the road to be detected is changed is determined based on the similarity to obtain a detection result.

The above steps S205 to S206 are respectively the same as steps S104 to S105 in the above aspect shown in Fig. 1A and will not be described in detail herein.

As the first candidate regions of the target region are determined from the pre-stored road regions based on the target geographical location, the probability that the geographical location of the first candidate region and the target geographical location of the target region are the same location is higher, and as the road region collected at the latest time can accurately reflect a latest road condition of the road, so probability that the first candidate region collected at the latest time and the target geographical location are the same location is higher, the latest road condition of the road can be reflected, thus the first candidate region collected at the latest time is determined as the reference region for the target region, which can improve accuracy of the determined reference region.

In order to obtain a more accurate first candidate region, in an aspect of the present disclosure, after step S203 of the above aspect shown in Fig. 2, a second candidate region of the target region may also be determined from the first candidate regions based on a target region location of the target region in the road image.

The above target region location indicates location information of the target region in the image.

In an implementation mode, as for each first candidate region, a matching degree between a region location of the first candidate region in the image and the target region location may be calculated, and the second candidate region of the target region is determined from the first candidate region based on the above matching degree.

The higher the matching degree is, the higher the probability that a location of the first candidate region in the image and the target region location are the same location becomes, the higher the probability that information such as image sizes, image resolutions of the first candidate region and the target region are the same become, so that when the reference region for the target region is determined subsequently, an error caused by problems of image sizes and image resolution can be avoided, and thus accuracy of the reference region in lack is further improved.

Based on the above aspect, the above step S204 may be implemented according to the following modes.

The second candidate region collected at the latest time is determined from all second candidate regions based on a time at which each of the second candidate regions is collected.

In step S102 of the above aspect shown in Fig. 1A, apart from a road detection method for determining the target region, the target region may be determined according to steps S302 to S303 in an aspect shown in Fig. 3A below.

Referring to Fig. 3A, which provides a schematic flowchart of a method for detecting a road change of a third type, the above method includes the following steps S301 to S307.

Step S301: a road image is obtained.

The above step S301 is the same as step S101 in the above aspect shown in Fig. 1A and will not be described in detail herein.

Step S302: instance segmentation for road region is performed on the road image, and a first region obtained through the instance segmentation is determined.

The above instance segmentation for road region means that the road region in the road image is recognized by using an instance segmentation mode.

Specifically, during instance segmentation for road region, first, instance detection is performed on the road image, an instance region where each instance is located in the road image is obtained, then road region recognition is performed on each instance region, a recognized road region is obtained as the first region obtained through instance segmentation.

For example, instance detection is performed on the road image, obtained instance regions where instances are located in the road image are respectively: a forward road region, a left intersection road region, a right intersection road region, a lane line region and a green belt region, then road region recognition is performed on each instance region, and obtained recognized road regions are: a forward road region, a left intersection road region and a right intersection road region.

In an implementation mode, when instance segmentation is performed, road region segmentation may be performed on the road image by using an instance segmentation model. The above instance segmentation model may be mask-region-based convolutional networks (Mask-R-CNN), You Only Look At CoefficienTs (yolact), Global Context Network (GCNet).

When instance segmentation is performed, region segmentation is performed on the image from a perspective of an instance in the image, fine-grained segmentation can be performed on the image by means of the instance segmentation, and thus the obtained first region is more accurate.

Step S303; when there are a plurality of the first regions, the plurality of first regions are merged to obtain a second region.

As the first region is a region obtained by performing instance segmentation for road region on the road image, the first region is recognized as an instance region of the road region in the road region. Further, there is a case that different instance regions in the image are the same type, for example, the instance regions may be the forward road region, the left intersection region and the right intersection region, types of which are a road region type. So when there are a plurality of first regions, it indicates that there are road regions in the road image, the plurality of road regions are merged to form a complete road region, and thus the first regions can be merged.

Specifically, the first regions can be merged according to the following two modes.

In a first implementation mode, the first regions are directly merged, and a region obtained through merging is used as the second region.

Taking Fig. 3B as an example, which shows a road image, there are two small boxes in the road image, a region of each small box is the first region, the two first regions are merged, and an obtained region is a region after merging.

In a second implementation mode, before merging is performed, the plurality of first regions may be screened, the first regions meeting a preset condition are obtained, the determined first regions are merged, and the second region is obtained.

The above preset condition may be: a region size being larger than a preset region size, the preset quantity of adjacent regions, and the like. For example, taking the region size being larger than the preset region size as an example, the preset region size is 128, the sizes of the plurality of first regions are respectively: 32, 64, 256 and 512, 32 and 64 are smaller than 128, 256 and 512 are larger than 128, so the first regions with the sizes being 256 and 512 meet the preset condition.

Step S304: the road region in the road image is determined based on the second region as the target region where the road to be detected is located.

Specifically, the road region in the road image may be determined according to the following two modes.

In a first implementation mode, the second region is directly determined as the road region in the road image.

In a second implementation mode, a shape of the second region obtained after merging may be an irregular shape, which causes certain difficulty to subsequent road change detection based on the road region, and based on this, a region in a preset shape containing the second region may be determined as the road region in the road image.

The above preset shape may be a rectangle. Taking the preset shape being the rectangle as an example, a region in a maximum bounding rectangle of the second region is determined as the road region in the road image.

The region in the preset shape containing the second region is determined as the road region, so the shape of the determined road region is relatively regular, road change detection can be performed subsequently based on the relatively regular road region, complexity of road change detection is reduced, and detection efficiency is improved.

Step S305: a target geographical location of the target region is obtained, and a reference region for the target region is determined from pre-stored road regions based on the target geographical location.

Step S306: the similarity between the target region and the reference region is calculated.

Step S307: whether the passability of the road to be detected is changed is determined based on the similarity to obtain the detection result.

The above steps S305 to S307 are respectively the same as the above steps S103 to S105 in the aspect shown in Fig. 1A and will not be described in detail herein.

It can be seen from the above that the first region is the region obtained by performing instance segmentation for road region on the road image, further, when instance segmentation is performed, a region where an instance in the road image is located is detected from the perspective of the instance in the image, the road region is determined from the instance region obtained through detection, that is, the first region is recognized as the instance region of the road region in the road region. Further, types of the different instance regions may be the road region type, so when there are the plurality of first regions, it indicates that there are the plurality of road regions in the road image, the first regions are merged, the obtained second region can accurately represent a complete road region, thus the obtained second region is determined as the road region in the road image, and integrity of the determined road region can be improved.

In step S104 of the above aspect shown in Fig. 1A, apart from adopting a mode of calculating the similarity through a similarity calculating model, the similarity may be calculated according to the following steps S404 to S405 of the aspect shown in Fig. 4.

Referring to Fig. 4, which provides a schematic flowchart of a method for detecting a road change of a fourth type, the above method includes the following steps S401 to S406.

Step S401: a road image is obtained comprising a road to be detected.

Step S402: a road region in the road image is extracted as a target region, where the road region is where the road to be detected is located.

Step S403: a target geographical location of the target region is obtained, and a reference region for the target region is determined from pre-stored road regions based on the target geographical location.

The above steps S401 to S403 are respectively the same as the above steps S101 to S103 in the aspect shown in Fig. 1A and will not be described in detail herein.

Step S404: a first image feature of the target region is extracted, and a second image feature of the reference region is obtained.

The first image feature represents an image feature of the target region, and the second image feature represents an image feature of the reference region. The above image feature may include: a color feature, a texture feature, an edge feature and the like.

Specifically, the first image feature may be extracted by using the following two modes.

In a first implementation mode, image feature extraction may be performed on the target region by using an image feature extraction algorithm to obtain the first image feature.

The above image feature extraction algorithm may include: Histogram of Oriented Gradient (HOG), Local Binary Pattern (LBP), and the like.

In a second implementation mode, the target region may be input into an image feature extraction model by using the image feature extraction model to obtain an image feature output by the image feature extraction model as the first image feature of the target region.

The above image feature extraction model may include: a residual neural network (Resnet), an image segmentation network (Segnet) and a Shufflenet (which is a Slimmable neural network model).

Specifically, the first image feature may be extracted by using the following two modes.

In a first implementation mode, image features of all road regions are pre-stored, and based on this, an image feature of the reference region may be obtained from the pre-stored image features as a second image feature.

In a second implementation mode, image feature extraction is performed on a reference image, and a specific extraction mode may refer to an extraction mode of the first image feature and will not be described in detail herein.

Step S405: the similarity between the first image feature and the second image feature is calculated as the similarity between the target region and the reference region.

The similarity between the first image feature and the second image feature reflects the similarity between the target region and the reference region. The greater the similarity is, the greater the similarity between the target region and the reference region becomes, and the smaller the similarity is, the smaller the similarity between the target region and the reference region becomes.

In an implementation mode, a Euclidean distance or a cosine distance between the first image feature and the second image feature may be calculated, and based on a corresponding relation between a preset similarity and a distance, a similarity corresponding to the calculated distance is determined as the similarity between the first image feature and the second image feature.

Step S406: whether the passability of the road to be detected is changed is determined based on the similarity to obtain the detection result.

The above step S406 is the same as the above step S105 in the aspect shown in Fig. 1A and will not be described in detail herein.

It can be seen from the above that the similarity between the first image feature and the second image feature can reflect the similarity between the target region and the reference region, so the calculated similarity is used as the similarity between the target region and the reference region, which enables accuracy of the determined similarity to be higher.

In combination with Fig. 5 below, a road change detection solution provided by the aspect of the present disclosure is described.

Fig. 5 is a flow block diagram of a method for road change detection provided by an aspect of the present disclosure.

In Fig. 5, which shows a flow of passability change detection specific to an intersection road, according to an arrow pointing sequence, the flow is divided into three parts, respectively: a data collection part, an intersection passability detection part and an intersection passability change detection part.

In the data collection part, road data are collected by using a vehicle camera.

In the intersection passability detection part, there are three steps.

First step, an intersection front image in the road data collected in the data collection part is recognized by using an image classification mode.

Second step, instance segmentation is performed on the intersection front image to obtain a road region in the intersection front image.

Third step, an intersection region in the intersection front image is determined based on the road region obtained through segmentation.

In the intersection passability change detection part, a reference region for the intersection region is determined from collected image data, intersection passability change detection is performed based on the intersection region in the intersection front image and the reference region, and a detection result of whether a to-be-detected intersection has a passability change is obtained.

Corresponding to the above method for detecting a road change, an aspect of the present disclosure provides an apparatus for detecting a road change.

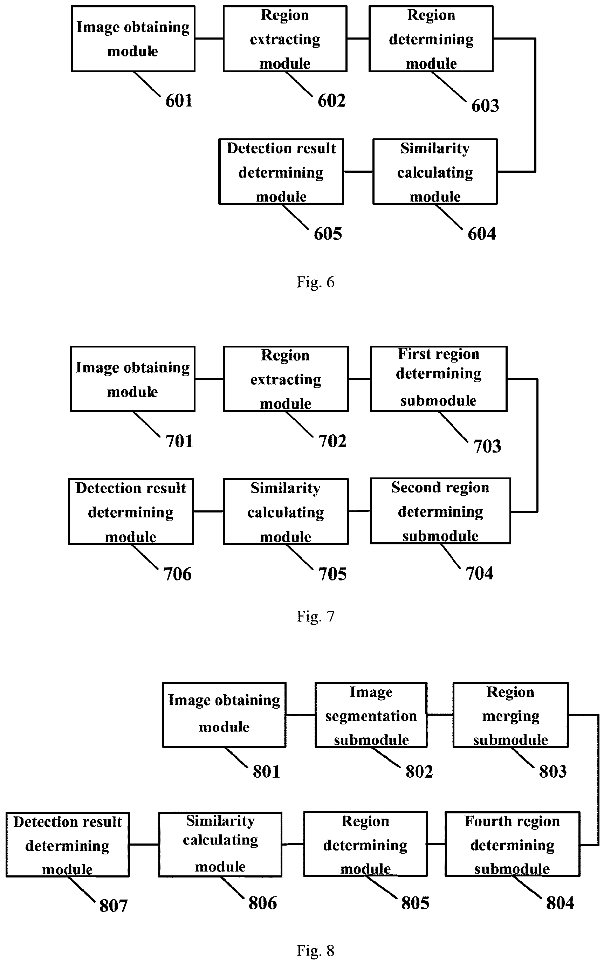

Referring to Fig. 6, which is a schematic structural diagram of an apparatus for detecting a road change of a first type provided by an aspect of the present disclosure, the above apparatus includes the following modules 601 to 605.

An image obtaining module 601 is configured to obtain a road image comprising a road to be detected.

A region extracting module 602 is configured to extract a road region in the road image as a target region, wherein the road region corresponds to where the road to be detected is located.

A region determining module 603 is configured to obtain a target geographical location of the target region, and determine a reference region for the target region from pre-stored road regions based on the target geographical location.

A similarity calculating module 604 is configured to calculate the similarity between the target region and the reference region.

A detection result determining module 605 is configured to determine, based on the similarity, whether the passability of the road to be detected is changed to obtain a detection result.

It can be seen from the above that in the solution provided by the aspect of the present disclosure, the electronic device extracts the target region where the road to be detected is located, determines the reference region for the target region and determines, based on the similarity, whether the passability of the road to be detected is changed between the target region and the reference region. Compared with manually detecting whether the passability of road is changed by a worker in the prior art, efficiency of road change detection is improved.

Besides, as the reference region is determined and obtained from the pre-stored road regions based on the target geographical location of the target region, the above reference region can reflect a historical road condition of the road to be detected, and as the target region can reflect a current road condition of the road to be detected, the similarity between the target region and the reference region can reflect a difference between the current road condition and the historical road condition of the road to be detected. Accordingly, whether the passability of the road to be detected is changed can be accurately determined based on the similarity between the target region and the reference region, so that accuracy of road change detection is improved.

Referring to Fig. 7, which is a schematic structural diagram of an apparatus for detecting a road change of a second type provided by an aspect of the present disclosure, the above apparatus includes the following modules 701 to 706.

An image obtaining module 701 is configured to obtain the road image.

A region extracting module 702 is configured to extract the road region in the road image as the target region where the road to be detected is located.

A first region determining submodule 703 is configured to determine first candidate regions of the target region from the pre-stored road regions based on the target geographical location.

A second region determining submodule 704 is configured to determine, from the first candidate regions based on a time at which each of the first candidate regions is collected, a first candidate region collected at a latest time as the reference region for the target region.

A similarity calculating module 705 is configured to calculate the similarity between the target region and the reference region.

A detection result determining module 706 is configured to determine, based on the similarity, whether the passability of the road to be detected is changed to obtain a detection result.

The first candidate regions of the target region are determined from the pre-stored road regions based on the target geographical location, the probability that a geographical location of the first candidate region and the target geographical location of the target region are the same location is higher, further, the road region collected at the latest time can accurately reflect a latest road condition of the road, so probability that the first candidate region collected at the latest time and the target geographical location are the same location is higher, the latest road condition of the road can be reflected, thus the first candidate region collected at the latest time is determined as the reference region for the target region, which can improve accuracy of the determined reference region.

In an aspect of the present disclosure, the above first region determining submodule 703 is specifically configured to, for each pre-stored road region of the pre-stored road regions, calculate a matching degree between a geographical location of the pre-stored road region and the target geographical location and determine the first candidate regions of the target region from the pre-stored road regions based on each of the calculated matching degrees.

The matching degree can reflect probability that a geographical location of the pre-stored road region and the target geographical location of the target region are the same location, the higher the matching degree is, the larger the probability becomes, and the lower the matching degree is, the smaller the probability becomes, so a road region whose geographical location may be the same location as the target geographical location may be determined accurately based on the matching degree, thus probability that a geographical location of the determined first candidate region and the target geographical location are the same location is higher.

In an aspect of the present disclosure, the above region determining module 603 further includes:
a third region determining submodule, configured to determine second candidate regions of the target region from the first candidate regions based on a target region location of the target region in the road image after the first region determining submodule determines the first candidate regions of the target region from the pre-stored road regions; and
a second region determining submodule 704, specifically configured to determine a second candidate region collected at a latest time from all second candidate regions based on a time at which each of the second candidate regions is collected.

The higher the matching degree is, the higher the probability that a location of the first candidate region in the image and the target region location are the same location becomes, the higher the probability that information such as image sizes, image resolutions of the first candidate region and the target region are the same become, so that when the reference region for the target region is determined subsequently, an error caused by problems of image sizes and image resolution can be avoided, and accuracy of the reference region in lack is further improved.

Referring to Fig. 8, which is a schematic structural diagram of an apparatus for detecting a road change of a third type provided by an aspect of the present disclosure, the above apparatus includes the following modules 801 to 807.

An image obtaining module 801 is configured to obtain the road image.

An image segmentation submodule 802 is configured to perform instance segmentation for the road region on the road image and determine a first region obtained through instance segmentation.

A region merging submodule 803 is configured to merge, when there are a plurality of the first regions, the first regions to obtain a second region.

A fourth region determining submodule 804 is configured to determine a road region in the road image based on the second region.

A region determining module 805 is configured to obtain a target geographical location of the target region and determine the reference region for the target region from the pre-stored road regions based on the target geographical location.

A similarity calculating module 806 is configured to calculate the similarity between the target region and the reference region.

A detection result determining module 807 is configured to determine, based on the similarity, whether the passability of the road to be detected is changed to obtain the detection result.

It can be seen from the above that the first region is the region obtained by performing instance segmentation for road region on the road image, further, when instance segmentation is performed, a region where an instance in the road image is located is detected from the perspective of the instance in the image, the road region is determined from the instance region obtained through detection, that is, the first region is recognized as the instance region of the road region in the road region. Further, types of the different instance regions may be the road region type, so when there are the plurality of first regions, it indicates that there are the plurality of road regions in the road image, the first regions are merged, the obtained second region can accurately represent a complete road region, thus the obtained second region is determined as the road region in the road image, and integrity of the determined road region can be improved.

In an aspect of the present disclosure, the fourth region determining submodule 804 is specifically configured to determine a region in preset shape containing the second region as the road region in the road image.

The region in the preset shape containing the second region is determined as the road region, so the shape of the determined road region is relatively regular, road change detection can be performed subsequently based on the relatively regular road region, complexity of road change detection is reduced, and detection efficiency is improved.

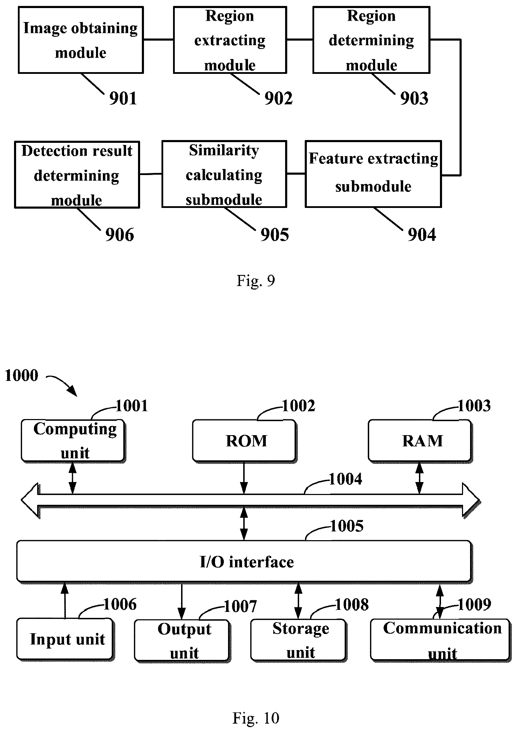

Referring to Fig. 9, which is a schematic structural diagram of an apparatus for detecting a road change of a fourth type provided by an aspect of the present disclosure, the above apparatus includes the following modules 901 to 906.

An image obtaining module 901 is configured to obtain the road image.

A region extracting module 902 is configured to extract a road region in the road image as the target region where the road to be detected is located.

A region determining module 903 is configured to obtain the target geographical location of the target region and determine the reference region for the target region from the pre-stored road regions based on the target geographical location.

A feature extracting submodule 904 is configured to extract a first image feature of the target region and obtain a second image feature of the reference region.

A similarity calculating submodule 905 is configured to calculate the similarity between the first image feature and the second image feature as the similarity between the target region and the reference region.

A detection result determining module 906 is configured to determine, based on the similarity, whether the passability of the road to be detected is changed to obtain the detection result.

It can be seen from the above that the similarity between the first image feature and the second image feature can reflect the similarity between the target region and the reference region, so the calculated similarity is used as the similarity between the target region and the reference region, which enables accuracy of the determined similarity to be higher.

In an aspect of the present disclosure, the above detection result determining module is specifically configured to determine that the passability of the road to be detected is changed when the similarity is smaller than a similarity threshold; and determine that the passability of the road to be detected is not changed when the similarity is greater than or equal to the similarity threshold.

Whether the passability of the road to be detected is changed is determined based on a magnitude relation between the similarity and the similarity threshold, and the magnitude relation between the similarity and the similarity threshold can accurately represent a magnitude of the similarity between the target region and the reference region, so whether the passability of the road to be detected is changed can be accurately determined based on the magnitude relation between the similarity and the similarity threshold.

In an aspect of the present disclosure, the above road to be detected is an intersection road.

When the road to be detected is the intersection road, by means of the solution of the present aspect, whether the passability of the intersection road is changed can be detected.

In the technical solution of the present disclosure, involved collection, saving, use, processing, transport, providing and disclosure and other processing of user personal information conform to related laws and regulations without violating public order and good custom.

According to an aspect of the present disclosure, the present disclosure further provides an electronic device, a readable storage medium and a computer program product.

In an aspect of the present disclosure, an electronic device is provided and includes:
at least one processor; and
a memory communicatively connected to the at least one processor, wherein
the memory stores an instruction executable by the at least one processor, and the instruction, when executed by the at least one processor, enables the at least one processor to execute the above method for detecting a road change.

In an aspect of the present disclosure, a non-transitory computer-readable storage medium storing a computer instruction is provided, wherein the computer instruction is configured to cause a computer to execute the above method for detecting a road change.

In an aspect of the present disclosure, a computer program product is provided and includes a computer program, which, when executed by a processor, implements the above method for detecting a road change.

Fig. 10 shows a schematic block diagram of an instance electronic device 1000 capable of being used for implementing aspects of the present disclosure. The electronic device intends to represent digital computer devices in various forms, such as a laptop computer, a desktop computer, a workbench, a personal digital assistant, a server, a blade server, a mainframe computer and other suitable computers. The electronic device may further represent movable apparatuses in various forms, such as the personal digital assistant, a cell phone, a smartphone, a wearable device and other similar computing apparatuses. Components and their connections, relations and functions shown herein are only used as instances rather than intend to limit implementation of the present disclosure described and/or required herein.

As shown in Fig. 10, the device 1000 includes a computing unit 1001, which can execute various appropriate actions and processing according to a computer program stored in a read-only memory (ROM) 1002 or a computer program loaded to a random access memory (RAM) 1003 from a storage unit 1008. In the RAM 1003, various programs and data required for operation of the device 1000 may be further stored. The computing unit 1001, the ROM 1002 and the RAM 1003 are mutually connected through a bus 1004. An input/output (I/O) interface 1005 is also connected to the bus 1004.

A plurality of components in the device 1000 are connected to the I/O interface 1005, including: an input unit 1006, for example, a keyboard and a mouse; an output unit 1007, for example, various displays and speakers; a storage unit 1008, for example, a magnetic disc, an optical disc; and a communication unit 1009, for example, a network card, a modem, a wireless communication transceiver. The communication unit 1009 allows the device 1000 to exchange information/data with other devices through a computer network, such as Internet, and/or various telecommunication networks.

The computing unit 1001 may be various general-purpose and/or special-purpose processing components with processing and computing capacity. Some instances of the computing unit 1001 include but not limited to a central processing unit (CPU), a graphics processing unit (GPU), various special-purpose artificial intelligence (AI) computing chips, various computing units for running a machine learning model algorithm, a digital signal processor (DSP), and any appropriate processor, controller, microcontroller and the like. The computing unit 1001 executes each method and processing described above, for example, the method for detecting a road change. For example, in some aspects, the method for detecting a road change may be realized as a computer software program, which is tangibly contained in a machine readable medium, for example, the storage unit 1008. In some aspects, a part of or all of a computer program may be loaded and/or installed onto the device 1000 via the ROM 1002 and/or the communication unit 1009. When the computer program is loaded to the RAM 1003 and executed by the computing unit 1001, one or more steps of the method for detecting a road change described above can be executed. Alternatively, in other aspects, the computing unit 1001 may be configured to execute the method for detecting a road change in any other appropriate mode (for example, by means of firmware).

Various implementations of the systems and technologies described above in this paper may be implemented in a digital electronic circuit system, an integrated circuit system, a field programmable gate array (FPGA), an application specific integrated circuit (ASIC), an application specific standard part (ASSP), a system on chip (SOC), a complex programmable logic device (CPLD), computer hardware, firmware, software and/or their combinations. These various implementations may include: being implemented in one or more computer programs, wherein the one or more computer programs may be executed and/or interpreted on a programmable system including at least one programmable processor, and the programmable processor may be a special-purpose or general-purpose programmable processor, and may receive data and instructions from a storage system, at least one input apparatus, and at least one output apparatus, and transmit the data and the instructions to the storage system, the at least one input apparatus, and the at least one output apparatus.

Program codes for implementing the methods of the present disclosure may be written in any combination of one or more programming languages. These program codes may be provided to processors or controllers of a general-purpose computer, a special-purpose computer or other programmable data processing apparatuses, so that when executed by the processors or controllers, the program codes enable the functions/operations specified in the flow diagrams and/or block diagrams to be implemented. The program codes may be executed completely on a machine, partially on the machine, partially on the machine and partially on a remote machine as a separate software package, or completely on the remote machine or server.

In the context of the present disclosure, a machine readable medium may be a tangible medium that may contain or store a program for use by or in connection with an instruction execution system, apparatus or device. The machine readable medium may be a machine readable signal medium or a machine readable storage medium. The machine readable medium may include but not limited to an electronic, magnetic, optical, electromagnetic, infrared, or semiconductor system, apparatus or device, or any suitable combination of the above contents. More specific examples of the machine readable storage medium will include electrical connections based on one or more lines, a portable computer disk, a hard disk, a random access memory (RAM), a read only memory (ROM), an erasable programmable read only memory (EPROM or flash memory), an optical fiber, a portable compact disk read only memory (CD-ROM), an optical storage device, a magnetic storage device, or any suitable combination of the above contents.

In order to provide interactions with users, the systems and techniques described herein may be implemented on a computer, and the computer has: a display apparatus for displaying information to the users (e.g., a CRT (cathode ray tube) or LCD (liquid crystal display) monitor); and a keyboard and a pointing device (e.g., a mouse or trackball), through which the users may provide input to the computer. Other types of apparatuses may further be used to provide interactions with users; for example, feedback provided to the users may be any form of sensory feedback (e.g., visual feedback, auditory feedback, or tactile feedback); an input from the users may be received in any form (including acoustic input, voice input or tactile input).

The systems and techniques described herein may be implemented in a computing system including background components (e.g., as a data server), or a computing system including middleware components (e.g., an application server) or a computing system including front-end components (e.g., a user computer with a graphical user interface or a web browser through which a user may interact with the implementations of the systems and technologies described herein), or a computing system including any combination of such background components, middleware components, or front-end components. The components of the system may be interconnected by digital data communication (e.g., a communication network) in any form or medium. Examples of the communication network include: a local area network (LAN), a wide area network (WAN) and the Internet.

A computer system may include a client and a server. The client and the server are generally away from each other and interact usually through a communication network. A relation between the client and the server is generated by running the computer program with a mutual client-server relation on a corresponding computer. The server may be a cloud server, or a server of a distributed system, or a server merged with a block chain.

It should be understood that steps can be reranked, added or deleted by using various forms of flows shown above. For example, all the steps recorded in the present disclosure can be executed in parallel, or in sequence or in different orders, which is not limited herein as long as a desired result of the technical solutions disclosed by the present disclosure can be realized.

The above implementations do not constitute limitation on the protection scope of the present disclosure. Those skilled in the art should understand that various modifications, combinations, sub-combinations and replacements can be made according to a design requirement and other factors. Any modification, equivalent replacement and improvement made within the spirit and principle of the present disclosure should be contained in the protection scope of the present disclosure.

## Claims

1. A method for detecting a road change, comprising:
obtaining (S101) a road image comprising a road to be detected;
extracting (S102) a road region in the road image as a target region, wherein the road region corresponds to where the road to be detected is located;
obtaining (S103) a target geographical location of the target region, and determining a reference region for the target region from pre-stored road regions based on the target geographical location;
calculating (S104) a similarity between the target region and the reference region; and
determining (S105), based on the similarity, whether a passability of the road to be detected is changed.

2. The method according to claim 1, wherein the determining the reference region for the target region from the pre-stored road regions based on the target geographical location comprises:
determining first candidate regions of the target region from the pre-stored road regions based on the target geographical location; and
determining, from the first candidate regions based on a time at which each respective region of the first candidate regions is collected, a first candidate region collected at a latest time as the reference region for the target region.

3. The method according to claim 2, wherein the determining the first candidate regions of the target region from the pre-stored road regions based on the target geographical location comprises:
calculating, for each pre-stored road region of the pre-stored road regions, a matching degree between a geographical location of the respective pre-stored road region and the target geographical location; and
determining the first candidate regions of the target region from the pre-stored road regions based on the calculated matching degrees, or
wherein the determining the reference region for the target region from the pre-stored road regions based on the target geographical location further comprises:
after the determining the first candidate regions of the target region from the pre-stored road regions based on the target geographical location, determining second candidate regions of the target region from the first candidate regions based on a target region location of the target region in the road image;
wherein the determining, from the first candidate regions based on the time at which each respective region of the first candidate regions is collected, the first candidate region collected at the latest time comprises:
determining, from the second candidate regions, based on a time that each respective region of the second candidate regions is collected, a second candidate region collected at the latest time.

4. The method according to claim 1, wherein the extracting the road region in the road image as the target region comprises:
performing instance segmentation for obtaining the road region on the road image and determining one or more first regions obtained through the instance segmentation;
merging, based on the determination of a plurality of the first regions, the plurality of first regions to obtain a second region; and
determining the road region in the road image based on the second region, and optionally,
wherein the determining the road region in the road image based on the second region comprises:
determining a region in a preset shape including the second region as the road region in the road image.

5. The method according to any one of claims 1-4, wherein the calculating the similarity between the target region and the reference region comprises:
extracting a first image feature of the target region and obtaining a second image feature of the reference region; and
calculating a similarity between the first image feature and the second image feature as the similarity between the target region and the reference region.

6. The method according to any one of claims 1-4, wherein the determining, based on the similarity, whether the passability of the road to be detected is changed comprises:
determining that the passability of the road to be detected is changed based on the similarity being smaller than a similarity threshold; and
determining that the passability of the road to be detected is not changed based on the similarity being greater than or equal to the similarity threshold.

7. The method according to any one of claims 1-4, wherein the road to be detected is an intersection road.

8. An apparatus for detecting a road change, comprising:
an image obtaining module (601), for obtaining a road image comprising a road to be detected;
a region extracting module (602), for extracting a road region in the road image as a target region, wherein the road region corresponds to where the road to be detected is located;
a region determining module (603), for obtaining a target geographical location of the target region and determining a reference region for the target region from pre-stored road regions based on the target geographical location;
a similarity calculating module (604), for calculating a similarity between the target region and the reference region; and
a detection result determining module (605), for determining, based on the similarity, whether a passability of the road to be detected is changed.

9. The apparatus according to claim 8, wherein the region determining module comprises:
a first region determining submodule, for determining first candidate regions of the target region from the pre-stored road regions based on the target geographical location; and
a second region determining submodule, for determining, from the first candidate regions based on a time at which each respective region of the first candidate regions is collected, a first candidate region collected at a latest time as the reference region for the target region.

10. The apparatus according to claim 9, wherein the first region determining submodule is specifically used to calculate, for each pre-stored road region of the pre-stored road regions, a matching degree between a geographical location of the respctive pre-stored road region and the target geographical location; and determine the first candidate regions of the target region from the pre-stored road regions based on the calculated matching degrees, or
wherein the region determining module further comprises:
a third region determining submodule, for determining second candidate regions of the target region from the first candidate regions based on a target region location of the target region in the road image after the first region determining submodule determines the first candidate regions of the target region from the pre-stored road regions;
wherein the second region determining submodule is used to determine, from the second candidate regions based on a time at which each respective region of the second candidate regions is collected, a second candidate region collected at the latest time.

11. The apparatus according to claim 8, wherein the region extracting module comprises:
an image segmenting submodule, for performing instance segmentation for obtaining the road region on the road image and determining one or more first regions obtained through the instance segmentation;
a region merging submodule, for merging, based on the determination of a plurality of the first regions, the plurality of first regions to obtain a second region; and
a fourth region determining submodule, for determining the road region in the road image based on the second region, and optionally,
wherein the fourth region determining submodule is specifically used to determine a region in a preset shape including the second region as the road region in the road image.

12. The apparatus according to any one of claims 8-11, wherein the similarity calculating module comprises:
a feature extracting submodule, for extracting a first image feature of the target region and obtaining a second image feature of the reference region; and
a similarity calculating submodule, for calculating a similarity between the first image feature and the second image feature as the similarity between the target region and the reference region.

13. The apparatus according to any one of claims 8-11, wherein the detection result determining module is specifically used to determine that the passability of the road to be detected is changed based on the similarity being smaller than a similarity threshold; and determine that the passability of the road to be detected is not changed based on the similarity being greater than or equal to the similarity threshold.

14. A non-transitory computer-readable storage medium storing computer instructions that, when executed by a computer, cause the computer to execute the method according to any one of claims 1-7.

15. A computer program product, comprising a computer program, which, when executed by a processor, implements the method according to any one of claims 1-7.
